# EUROPÄISCHE PATENTSCHRIFT

(11) **EP 3 030 591 B1**
(45) Veröffentlichungstag und Bekanntmachung des Hinweises auf die Patenterteilung: **14.06.2017**
(21) Anmeldenummer: 14744098.6
(22) Anmeldetag: 25.07.2014
(51) Int. Cl.: C08F 2/00

(54) **POLYMERDISPERSIONEN UND ANTIDRÖHNMASSEN MIT ZWEISTUFIG HERGESTELLTEM EMULSIONSPOLYMERISAT**
POLYMER DISPERSIONS AND SOUND DEADENER COMPOSITIONS WITH EMULSION POLYMER FROM TWO-STAGE PREPARATION
DISPERSIONS DE POLYMÈRE ET MASSES ANTIBRUIT PRÉSENTANT UN POLYMÈRE EN ÉMULSION PRÉPARÉ EN DEUX ÉTAPES

(30) Priorität: 06.08.2013 EP 13179452
(43) Veröffentlichungstag der Anmeldung: 15.06.2016
(73) Patentinhaber: BASF SE, 67056 Ludwigshafen am Rhein (DE)
(72) Erfinder: WULFF, Dirk, 67105 Schifferstadt (DE); DIMMER, Jörg-Alexander, 68161 Mannheim (DE); PREISHUBER-PFLÜGL Peter, 68163 Mannheim (DE)
(74) Vertreter: BASF IP Association
(86) Internationale Anmeldenummer: PCT/EP2014/066054
(87) Internationale Veröffentlichungsnummer: WO 2015/018665

(56) Entgegenhaltungen:
- WO-A1-2007/034933
- US-A1- 2007 048 445

## Beschreibung

Die Erfindung betrifft eine wässrige Polymerdispersion enthaltend ein Polymerisat, welches erhältlich ist durch Emulsionspolymerisation aus einem bestimmten Monomergemisch, enthaltend bestimmte hydrophile und hydrophobe Monomere. Dabei ist das Polymerisat durch mindestens zweistufige Emulsionspolymerisation herstellbar, wobei in einer ersten Polymerisationsstufe der überwiegende Teil oder die Gesamtmenge der hydrophilen Monomere und in einer späteren Polymerisationsstufe der überwiegende Teil oder die Gesamtmenge der hydrophoben Monomere eingesetzt wird. Die Polymerdispersion ist als Bindemittel für anorganische und optional auch organische Feststoffpartikel enthaltende, wässrige Partikeldispersionen, insbesondere von Antidröhnmassen geeignet. Die Erfindung betrifft auch ein Verfahren zur Dämpfung von Vibrationen oder Schwingungen von Bauteilen von Fahrzeugen.

Durch Vibration oder Schwingungen von Bauteilen von Maschinen oder Fahrzeugen werden unerwünschte Geräusche erzeugt. Zur Geräuschminderung können die Bauteile mit sogenannten Antidröhnmassen, auch LASD-Massen (Liquid Applied Sound Damping) genannt, versehen werden. Schwingungsdämpfende Materialien sind beispielsweise beschrieben in Journal of Materials Science 36 (2001) 5733-5737, US 2004/0033354 und US 6502821. Die Ausrüstung von geometrisch komplexen, dreidimensionalen Bauteilen kann durch Aufsprühen einer Antidröhnmasse in Form einer wässrigen Dispersion erfolgen. Derartige Dispersionen enthalten in der Regel ein dispergiertes, viskoelastisches Polymer und anorganische Füllstoffe. Schwingungsdämpfende Zusammensetzung auf Basis von wasserbasierten Polymerdispersionen und anorganischen Füllstoffen sowie weiterer Hilfsstoffe sind bekannt aus EP 1520865, WO 2007/034933, EP 2420412 und WO 2012/010632. Die Güte einer Antidröhnmasse kann durch Messung der Biegeschwingungen im Resonanzkurvenverfahren nach ISO 6721-1 und ISO 6721-3 gemessen werden. Ein Maß für die schwingungsdämpfende Wirkung ist der Verlustfaktor tan delta. Bei der Verwendung von Antidröhnmassen auf Basis von viskoelastischen Polymeren ist der Verlustfaktor temperaturabhängig. Es werden Materialien gewünscht, die zu einem möglichst großen Verlustfaktor in dem Temperaturbereich führen, in welchem die Maschinen oder Fahrzeuge üblicherweise betrieben werden, z.B. zwischen 0 und 40 °C. Bei auf wässrigen Systemen beruhenden Antidröhnmassen stellen das Trocknungsverhalten und die Wasseraufnahme der getrockneten Massen bei Kontakt mit Feuchtigkeit besondere Herausforderungen dar. Beim Trocknen kann es zu einer unerwünschten Blasenbildung, der Bildung von mehr oder weniger großen Poren oder einer unerwünschten Expansion kommen.

Aufgabe der vorliegenden Erfindung war es, weitere Materialien zur Verfügung zu stellen mit guten oder verbesserten schwingungsdämpfenden Eigenschaften und insbesondere einem guten Trocknungsverhalten und möglichst geringer Wasseraufnahme der getrockneten Massen.

Es wurde gefunden, dass bei Verwendung von bestimmten Polymerdispersionen als Bindemittel Antidröhnmassen zur Verfügung gestellt werden können mit guten schwingungsdämpfenden Eigenschaften, geringer Wasseraufnahme und gutem Trocknungsverhalten.

Gegenstand der Erfindung ist daher eine wässrige Polymerdispersion, enthaltend mindestens ein Polymerisat, welches erhältlich ist durch Emulsionspolymerisation aus einem Monomergemisch, enthaltend hydrophile Monomere (a) bis (c), welche hydrophile Gruppen aufweisen und zwar
(a) mindestens ein (Meth)acrylatmonomer mit Polyethylenglykolgruppe,
(b) mindestens ein Säuremonomer,
(c) mindestens ein Hydroxyalkyl(meth)acrylat mit 1 bis 20 C-Atomen in der Alkylgruppe, sowie mindestens ein hydrophobes Hauptmonomer (d), ausgewählt aus
(d) Alkyl(meth)acrylaten mit 1 bis 20 C-Atomen in der Alkylgruppe, Vinylaromaten und Mischungen dieser Monomeren
   sowie optional
(e) weiteren, von den Monomeren (a) bis (d) verschiedenen, ethylenisch ungesättigten radikalisch polymerisierbaren Monomeren;
wobei das Polymerisat durch mindestens zweistufige Emulsionspolymerisation herstellbar ist, wobei in einer ersten Polymerisationsstufe der überwiegende Teil oder die Gesamtmenge der hydrophilen Monomere (a) bis (c) eingesetzt wird und in einer späteren Polymerisationsstufe der überwiegende Teil oder die Gesamtmenge der hydrophoben Monomere (d) eingesetzt wird.

Gegenstand der Erfindung ist auch die Verwendung der Polymerdispersion als Bindemittel zur Herstellung einer wässrigen Partikeldispersion, wobei die wässrige Partikeldispersion in Wasser unlösliche, dispergierte anorganische Feststoffpartikel sowie optional zusätzlich auch organische Feststoffpartikel, insbesondere anorganische oder organische Füllstoffe enthält.

Gegenstand der Erfindung sind auch eine wässrige Partikeldispersion, insbesondere eine zur Herstellung von Antidröhnmassen geeignete Partikeldispersion sowie die Antidröhnmassen selbst, jeweils enthaltend
(i) die Polymerdispersion; und
(ii) anorganische Füllstoffe
und optional organische Füllstoffe sowie weitere Hilfsstoffe.

Gegenstand der Erfindung ist auch die Verwendung der Antidröhnmasse zur Schwingungsdämpfung von Karosserieteilen eines Fahrzeugs sowie ein Verfahren zur Dämpfung von Vibrationen oder Schwingungen von Bauteilen von Fahrzeugen, wobei
(1) eine erfindungsgemäße Antidröhnmasse zur Verfügung gestellt wird, und
(2) die Antidröhnmasse auf ein Bauteil eines Fahrzeuges aufgebracht und getrocknet wird.

Hauptmonomere sind Monomere, welche insgesamt mehr als 50 Gew.%, bezogen auf die Summe aller Monomere eines Polymers ausmachen.

Die Bezeichnung "(Meth)acryl..." und ähnliche Bezeichnungen werden als abkürzende Schreibweise verwendet für "Acryl... oder Methacryl...".

Hydrophile Monomere sind Monomere, welche mindestens eine hydrophile Gruppe aufweisen, insbesondere mindestens eine Hydroxygruppe, Säuregruppe oder Polyethylenglykolgruppe mit mindestens zwei Ethylenglykoleinheiten. Hydrophobe Monomere sind Monomere, welche keine hydrophile Gruppe aufweisen, insbesondere Kohlenwasserstoffmonomere oder Al-kyl(meth)acrylatester.

Die (Meth)acrylatmonomere mit Polyethylenglykolgruppe (a) werden vorzugsweise eingesetzt in einer Menge von mindestens 0,1 Gew.%, vorzugsweise 0,2 bis 5 Gew.% oder von 0,2 bis 3 Gew.%, bezogen auf die Gesamtmenge aller Monomere. Polyethylenglykolgruppen sind Polyalkylenglykolgruppen, bei denen mindestens 50 Gew.%, vorzugsweise mindestens 60 Gew.%, mindestens 75 Gew.% oder 100 Gew.% der Alkylenglykoleinheiten Ethylenglykoleinheiten sind. Die übrigen Alkylenglykoleinheiten können beispielsweise 3 bis 4 C-Atome aufweisen. Die Polyalkylenglykolkette kann eine OH-Endgruppe oder vorzugsweise eine Alkyletherendgruppe mit z.B. 1 bis 4 C-Atomen, insbesondere eine Methoxygruppe aufweisen. Geeignete (Meth)acrylatmonomere mit Polyethylenglykolgruppe (a) sind z.B. Alkoxy-poly(ethylenglykol)-(meth)acrylate. Die Alkoxygruppe kann z.B. 1 bis 4 C-Atome aufweisen. Bevorzugt ist eine Methoxygruppe. Die Poly(ethylenglykol)-Gruppe weist vorzugsweise ein gewichtsmittleres Molekulargewicht von 500 bis 5000, insbesondere von 1000 bis 3000 auf. Geeignet ist z.B. Methyl-poly(ethylenglykol)-methacrylat, wobei die Poly(ethylenglykol)-Gruppe ein gewichtsmittleres Molekulargewicht von 500 bis 5000, insbesondere von 1000 bis 3000 aufweist, z.B. MPEG 2000 MA (Bisomer® S20W).

Das Polymerisat wird aus mindestens einem Säuremonomer (b) hergestellt. Die Monomerart (b) kann zu mindestens 0,05 Gew.%, vorzugsweise 0,1 bis 5 Gew.%, besonders bevorzugt 0,2 bis 4 Gew. % bezogen auf die Gesamtmenge der zur Herstellung des Polymerisats eingesetzten Monomere, enthalten sein. Säuremonomere sind ethylenisch ungesättigte, radikalisch polymerisierbare Monomere, welche mindestens eine Säuregruppe aufweisen. Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure.

Die Hydroxyalkyl(meth)acrylatmonomere (c) werden vorzugsweise eingesetzt in einer Menge von mindestens 0,05 Gew.%, vorzugsweise 0,1 bis 5 Gew.% oder von 0,2 bis 3 Gew.%, bezogen auf die Gesamtmenge der zur Herstellung des Polymerisats eingesetzten Monomere. Die Hydroxyalkyl(meth)acrylate weisen 1 bis 20, vorzugsweise 2 bis 10 C-Atome in der Alkylgruppe auf. Geeignete Monomere (c) sind z.B. ausgewählt aus Hydroxyethyl(meth)acrylat, Hydroxypropyl(meth)acrylat, Hydroxybutyl(meth)acrylat und deren Gemisch. Bevorzugt sind Hydroxyethyl(meth)acrylat und Hydroxypropyl(meth)acrylat, insbesondere Hydroxyethylmethacrylat.

Die hydrophoben Hauptmonomere werden vorzugsweise eingesetzt in einer Menge von insgesamt mindestens 50 Gew.% oder mehr, vorzugsweise 60 bis 99 Gew.% oder 80 bis 99 Gew.%, bezogen auf die Gesamtmenge der zur Herstellung des Polymerisats eingesetzten Monomere. Die Hauptmonomere (d) sind ausgewählt aus Alkyl(meth)acrylaten mit 1 bis 20 C-Atomen, vorzugsweise mit 1 bis 10 C-Atomen in der Alkylgruppe, Vinylaromaten und Mischungen dieser Monomere. Alkyl(meth)acrylate sind z.B. Methylmethacrylat, Methylacrylat, n-Butylacrylat, Ethylacrylat, n-Hexylacrylat, Octylacrylat, 2-Ethylhexylacrylat, und 2-Propylheptylacrylat. Insbesondere sind auch Mischungen der (Meth)acrylsäurealkylester geeignet. Als Vinylaromaten kommen Vinyltoluol alpha- und para-Methylstyrol, alpha-Butylstyrol, 4-n-Butylstyrol, 4-n-Decylstyrol und vorzugsweise Styrol in Betracht.

Optional kann das Polymerisat aus weiteren, von den Monomeren (a) bis (d) verschiedenen, ethylenisch ungesättigten radikalisch polymerisierbaren Monomeren (e) hergestellt werden. Die Menge an weiteren Monomeren (e) ist vorzugsweise 0 bis 10 Gew.%, oder 0,1 bis 5 Gew.%, bezogen auf die Gesamtmenge an Monomeren. Die weiteren Monomere (e) können ausgewählt sein aus Vinylestern von bis zu 20 C-Atome enthaltenden Carbonsäuren, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren. Vinylester von Carbonsäuren mit 1 bis 20 C-Atomen sind z. B. Vinyllaurat, Vinylstearat, Vinylpropionat, Versaticsäurevinylester und Vinylacetat. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Isopren und Chloropren genannt.

Eine Ausführungsform der Erfindung betrifft eine Polymerdispersion wobei das Polymerisat erhältlich ist durch Emulsionspolymerisation aus einem Monomergemisch, enthaltend
(a) mindestens ein Monomer ausgewählt aus Alkoxy-poly(ethylenglykol)-(meth)acrylaten, wobei die Alkoxygruppe vorzugsweise eine Methoxygruppe ist und die Poly(ethylenglykol)-Gruppe vorzugsweise ein gewichtsmittleres Molekulargewicht von 500 bis 5000 aufweist;
(b) mindestens ein Säuremonomer (b), ausgewählt aus Acrylsäure und Methacrylsäure;
(c) mindestens ein Monomer ausgewählt aus Hydroxyethyl(meth)acrylat, Hydroxypropyl(meth)acrylat und Hydroxybutyl(meth)acrylat;
(d) mindestens ein hydrophobes Monomers ausgewählt aus Alkyl(meth)acrylaten mit 1 bis 10 C-Atomen in der Alkylgruppe und Styrol;
(e) optional weiteren, von den Monomeren (a) bis (d) verschiedenen, ethylenisch ungesättigten radikalisch polymerisierbaren Monomeren, ausgewählt aus Vinylestern von bis zu 20 C-Atome enthaltenden Carbonsäuren, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

Die Glasübergangstemperatur des durch Emulsionspolymerisation hergestellten Polymerisats liegt vorzugsweise im Bereich von -60 °C bis kleiner oder gleich +70 °C oder im Bereich von -30 °C bis kleiner oder gleich +60 °C, besonders bevorzugt im Bereich von -15 bis +50°C. Die Glasübergangstemperatur lässt sich bestimmen durch Differential Scanning Calorimetrie (ASTM D 3418-08, sog. "midpoint temperature"). Dem Fachmann ist allgemein bekannt, wie durch Wahl von Art und Menge der Monomere die gewünschte Glasübergangstemperatur eingestellt werden kann.

Bei den erfindungsgemäßen Polymerdispersionen handelt es sich um Dispersionen von Polymeren in wässrigem Medium. Bei dem wässrigen Medium kann es sich z.B. ausschließlich um Wasser handeln oder auch um Mischungen aus Wasser und einem damit mischbaren Lösemittel wie Methanol, Ethanol oder Tetrahydrofuran. Vorzugsweise werden keine organischen Lösungsmittel eingesetzt. Die Feststoffgehalte der Dispersionen betragen vorzugsweise von 15 bis 75 Gew.-%, bevorzugt von 40 bis 60 Gew.-%, insbesondere größer 50 Gew.%. Der Feststoffgehalt kann z.B. durch entsprechende Einstellung der bei der Emulsionspolymerisation eingesetzten Wassermenge und/oder der Monomermengen erfolgen. Die mittlere Teilchengröße der in der wässrigen Dispersion dispergierten Polymerteilchen ist vorzugsweise kleiner 400 nm, insbesondere kleiner 300 nm. Besonders bevorzugt liegt die mittlere Teilchengröße zwischen 140 und 250 nm. Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Der pH-Wert der Polymerdispersion wird vorzugsweise auf pH größer 4 insbesondere auf einen pH-Wert zwischen 5 und 9 eingestellt.

Vorzugsweise sind die erfindungsgemäßen Polymerdispersionen emulgatorarm, d.h. sie enthalten Emulgatoren (der Polymerisationsmischung zugesetzte, nicht-polymere, amphiphile, oberflächenaktive Substanzen) in einer Menge von vorzugsweise weniger als 3 Gew.% oder weniger als 1 Gew.%. In einer Ausführungsform der Erfindung erfolgt daher die mindestens zweistufig durchgeführte Emulsionspolymerisation emulgatorarm oder emulgatorfrei, d.h. ohne Zusatz von Emulgatoren. Das in der ersten Stufe gebildete Polymerisat kann die Funktion eines Emulgators bzw. eines Schutzkolloids für die nachfolgenden Stufen übernehmen.

Gegenstand der Erfindung ist auch ein Verfahren zur Herstellung einer Polymerdispersion, wobei durch mindestens zweistufige Emulsionspolymerisation ein Polymerisat hergestellt wird aus einem Monomergemisch, enthaltend hydrophile Monomere (a) bis (c), welche hydrophile Gruppen aufweisen und zwar
(a) mindestens ein (Meth)acrylatmonomer mit Polyethylenglykolgruppe,
(b) mindestens ein Säuremonomer,
(c) mindestens ein Hydroxyalkyl(meth)acrylat mit 1 bis 20 C-Atomen in der Alkylgruppe, sowie mindestens ein hydrophobes Hauptmonomer (d), ausgewählt aus
(d) Alkyl(meth)acrylaten mit 1 bis 20 C-Atomen in der Alkylgruppe, Vinylaromaten und Mischungen dieser Monomeren
   sowie optional
(e) weiteren, von den Monomeren (a) bis (d) verschiedenen, ethylenisch ungesättigten radikalisch polymerisierbaren Monomeren;
wobei in einer ersten Polymerisationsstufe der überwiegende Teil oder die Gesamtmenge der hydrophilen Monomere (a) bis (c) eingesetzt wird und in einer späteren Polymerisationsstufe der überwiegende Teil oder die Gesamtmenge der hydrophoben Monomere (d) eingesetzt wird.

Die Herstellung der Polymere kann durch mindestens zweistufige Emulsionspolymerisation erfolgen, es handelt sich dann um ein Emulsionspolymerisat. Bei der Emulsionspolymerisation werden in der Regel ionische und/oder nicht-ionische Emulgatoren und/oder Schutzkolloide bzw. Stabilisatoren als grenzflächenaktive Verbindungen verwendet, um die Dispergierung der Monomeren in dem wässrigen Medium zu unterstützen. Das in der ersten Stufe sich bildende Polymerisat kann als Emulgator bzw. als Schutzkolloid wirken und es kann deshalb vorteilhaft mit reduzierten Mengen oder frei von zusätzlichen Schutzkolloiden oder Emulgatoren gearbeitet werden.

Falls Emulgatoren als zusätzliche grenzflächenaktive Substanzen eingesetzt werden, so handelt es sich vorzugsweise um anionische oder nichtionische Emulgatoren. Geeignete Emulgatoren sind beispielsweise ethoxylierte C₈- bis C₃₆- oder C₁₂- bis C₁₈-Fettalkohole mit einem Ethoxylierungsgrad von 3 bis 50 oder von 4 bis 30, ethoxylierte Mono-, Di- und Tri- C₄- bis C₁₂-oder C₄- bis C₉-Alkylphenole mit einem Ethoxylierungsgrad von 3 bis 50, Alkalimetallsalze von Dialkylestern der Sulfobernsteinsäure, Alkalimetall- und Ammoniumsalze von C₈- bis C₁₂-Alkylsulfaten, Alkalimetall- und Ammoniumsalze von C₁₂- bis C₁₈-Alkylsulfonsäuren und Alkalimetall- und Ammoniumsalze von C₉- bis C₁₈-Alkylarylsulfonsäuren. Kationaktive Emulgatoren sind z.B. Verbindungen mit mindestens einer Amino- oder Ammoniumgruppe und mindestens einer C8-C22-Alkylgruppe. Weitere geeignete Emulgatoren sind Verbindungen der allgemeinen Formel 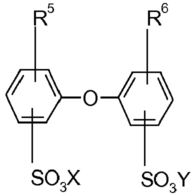 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company). Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208. Handelsnamen von Emulgatoren sind z. B. Dowfax^{®} 2 A1, Emulan^{®} NP 50, Dextrol^{®} OC 50, Emulgator 825, Emulgator 825 S, Emulan^{®} OG, Texapon^{®} NSO, Nekanil^{®} 904 S, Lumiten^{®} I-RA, Lumiten^{®} E 3065, Disponil^{®} FES 77, Lutensol^{®} AT 18, Steinapol^{®} VSL, Emulphor^{®} NPS 25. Geeignet sind auch copolymerisierbare Emulgatoren, welche eine radikalisch polymerisierbare, ethylenisch ungesättigte Doppelbindung enthalten, z.B. reaktive anionische Emulgatoren wie Adeka® Resoap SR-10.

Die Emulsionspolymerisation erfolgt in der Regel bei 30 bis 130, vorzugsweise 50 bis 95 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet.

Die Polymerisation erfolgt mindestens zweistufig, wobei in einer ersten Polymerisationsstufe der überwiegende Teil oder die Gesamtmenge der hydrophilen Monomere (a) bis (c) eingesetzt wird und in einer späteren Polymerisationsstufe der überwiegende Teil oder die Gesamtmenge der hydrophoben Monomere (d) eingesetzt wird. Die weiteren Monomere (e) können in einer beliebigen Polymerisationsstufe eingesetzt werden. Bevorzugt ist ein Zulaufverfahren, bei dem die Monomere der ersten Stufe und Initiator vorgelegt werden, auf die Polymerisationstemperatur erhitzt wird und anpolymerisiert wird, z.B. für einen Zeitraum von 5 Minuten bis 1 Stunde. Die Monomere der zweiten und von optional weiteren Stufen können anschließend über einen oder über mehrere räumlich getrennte Zuläufe, kontinuierlich, stufenweise oder unter Überlagerung eines Konzentrationsgefälles unter Aufrechterhaltung der Polymerisation der Polymerisationszone zugeführt werden. Bei der Polymerisation kann auch z.B. zur besseren Einstellung der Teilchengröße eine Polymersaat vorgelegt werden.

Vorzugsweise werden in der ersten Polymerisationsstufe mehr als 50 Gew.%, mindestens 60 Gew.% oder mindestens 80 Gew.% oder 100 Gew.% der Gesamtmenge der hydrophilen Monomere (a) bis (c) und mindestens 1 Gew.%, vorzugsweise 2 bis 20 oder 2 bis 10 Gew.% der Gesamtmenge der hydrophoben Monomere (d) eingesetzt und in einer zweiten bzw. späteren Polymerisationsstufe werden mindestens 80 Gew.%, vorzugsweise 90 bis 98 Gew.% der Gesamtmenge der hydrophoben Monomere (d) eingesetzt.

Bei der Emulsionspolymerisation können die üblichen und bekannten Hilfsstoffe, wie z.B. wasserlösliche Initiatoren und Regler eingesetzt werden. Wasserlösliche Initiatoren für die Emulsionspolymerisation sind z.B. Ammonium- und Alkalimetallsalze der Peroxidischwefelsäure, z. B. Natriumperoxodisulfat, Wasserstoffperoxid oder organische Peroxide, z. B. tert-Butylhydroperoxid. Geeignet sind auch sogenannte Reduktions-Oxidations (Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure oder tert-Butylhydroperoxid/Ascorbinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden. Zur Entfernung der Restmonomeren wird üblicherweise auch nach dem Ende der eigentlichen Emulsionspolymerisation Initiator zugesetzt.

Bei der Polymerisation können Molekulargewichtsregler eingesetzt werden, z. B. in Mengen von 0 bis 0,8 Gew.-Teile, bezogen auf 100 Gew.-Teile der zu polymerisierenden Monomeren, wodurch die Molmasse verringert wird. Geeignet sind z. B. Verbindungen mit einer Thiolgruppe wie tert.-Butylmercaptan, Thioglycolsäureester, z.B. 2-Ethylhexylthioglycolat, Mercaptoethanol, Mercaptopropyltrimethoxysilan, n-Dodecylmercaptan oder tert.-Dodecylmercaptan. Weiterhin können Regler ohne Thiolgruppe verwendet werden, wie z.B. C6- bis C20-Kohlenwasserstoffe, welche bei Wasserstoffabstraktion ein Pentadienylradikal bilden, z.B. Terpinolen. In einer bevorzugten Ausführungsform ist das Emulsionspolymerisat hergestellt unter Verwendung von 0,05 bis 0,5 Gew.%, bezogen auf die Monomermenge, an mindestens einem Molekulargewichtsregler.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bioder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Gegenstand der Erfindung ist auch die Verwendung einer erfindungsgemäßen Polymerdispersion als Bindemittel zur Herstellung einer wässrigen Partikeldispersion, wobei die wässrige Partikeldispersion in Wasser unlösliche, dispergierte anorganische Feststoffpartikel, sowie optional zusätzlich auch organische Feststoffpartikel, insbesondere anorganische oder organische Füllstoffe enthält. Die dispergierten Feststoffpartikel können beispielsweise ausgewählt sein aus anorganischen Füllstoffen, insbesondere aus Kaolin, Kreide, Bariumsulfat, Ruß, Graphit, Talkum, Tonmineralien, Mikrodolomit, Quarzmehl und Glimmer, sowie optional zusätzlich aus organischen Füllstoffen, insbesondere Pulverlacke, Polymerpulver aus zum Beispiel gemahlenen EVA-Festharzen, getrockneten Acrylatdispersionen und Polysaccharide. Bei der wässrigen Partikeldispersion kann es sich beispielsweise um eine Antidröhnmasse oder um eine Masse für Unterbodenschutz eines Kraftfahrzeugs handeln.

Gegenstand der Erfindung ist auch eine wässrige Partikeldispersion, die u.a. zur Herstellung einer Antidröhnmasse geeignet ist, enthaltend
(i) eine oben beschriebene Polymerdispersion; und
(ii) anorganische sowie optional zusätzlich auch organische Füllstoffe.

Vorzugsweise enthält die Antidröhnmasse
(a) 5 bis 50 Gew.%, vorzugsweise 10 bis 40 Gew.% (bezogen auf Feststoffe) an der oben beschriebenen Polymerdispersion,
(b) 40 bis 80 Gew.%, vorzugsweise 60 bis 70 Gew.% anorganische Füllstoffe,
(c) 0 bis 40 Gew.%, vorzugsweise 5 bis 20 Gew.% organische Füllstoffe,
(d) 10 bis 40 Gew.% , vorzugsweise 20 bis 30 Gew.% Wasser und
(e) 0 bis 10 oder 0 bis 5 Gew.%, vorzugsweise 0,1 bis 3 Gew.% Hilfsstoffe.

Geeignete anorganische Füllstoffe sind z.B. Calciumcarbonat, Kaolin, Mica, Silica, Kreide, Mikrodolomit, Quarzmehl, Glimmer, Talkum, Ton, Bariumsulfat, Tonerde, Eisenoxid, Titandioxid, Glaspulver, Glasschuppen, Magnesiumcarbonat, Aluminiumhydroxid, Bentonit, Flugasche, Kiselguhr, Perlit, Ruß, Graphit, Tonmineralien, Mikrodolomit, Quarzmehl und Glimmer. Bevorzugt werden schuppenförmige Füllstoffe wie z.B. Mica eingesetzt, allein oder in Kombination mit gewöhnlichen anorganischen Pigmenten wie Calciumcarbonat, Bariumsulfat, Kaolin, Silica, Kreide oder Talkum.

Geeignete organische Füllstoffe sind z.B. Pulverlacke, z.B. Epoxypulverlacke, Polymerpulver aus zum Beispiel gemahlenen Ethylen/Vinylacetat Copolymer (EVA)-Festharzen, getrockneten Acrylatdispersionen und Polysaccharide.

Vorzugsweise werden 50 bis 700 oder 100 bis 550 Gewichtsteile anorganischer Füllstoff auf 100 Gewichtsteile Polymerdispersion eingesetzt, wobei vorzugsweise 30 bis 150 oder 40 bis 120 Gewichtsteile schuppenförmige Füllstoffe auf 100 Gewichtsteile Polymerdispersion eingesetzt werden.

Hilfsstoffe, die vorzugsweise zu mindestens 0,1 Gew.%, z.B. von 0,1 bis 10 Gew.% oder von 0,2 bis 5 Gew.% oder von 0,2 bis 3 Gew.% eingesetzt werden sind z.B. Verdickungsmitteln, Harze, Weichmacher, Dispergiermittel, Cosolventien, Stabilisatoren, Benetzungsmittel, Konservierungsstoffe, Schauminhibitoren, Glas- oder Kunststoffperlen, Glas- oder Kunststoffhohlkörper, Gefrierschutzmittel, Antioxidantien, UV-Absorber, Epoxypulverlacke, Emulgatoren, Siloxane, organisch modifizierte Siloxane und Antistatika. Von den Hilfsstoffen können eines, zwei oder mehrere in Kombination eingesetzt werden. Geeignete Cosolventien sind z.B. Ethylenglykol, Diethylenglykol, Ethylenglykolalkylether (z.B. Cellosolve®-Typen), Diethylenglykolalkylether (z.B. Carbitol®-Typen), Carbitolacetat, Butylcarbitolacetat oder deren Mischungen. Verdickungsmittel sind z.B. Polyvinylalkohole, Cellulosederivate, Polyacrylsäuren oder Acrylsäu-re/Acrylatester Copolymere in Mengen von z.B. 0,01 bis 4 oder von 0,05 bis 1,5 oder von 0,1 bis 1 Gewichtsteilen, bezogen auf 100 Gewichtsteile Feststoff. Dispergiermittel sind z.B. Natriumhexametaphosphat, Natriumtripolyphosphate, oder Polycarbonsäuren. Gefrierschutzmittel sind z.B. Ethylenglykol oder Propylenglykol. Schauminhibitoren sind z.B. Silikone. Stabilisatoren sind z.B. polyvalente Metallverbindungen wie Zinkoxid, Zinkchlorid oder Zinksulfat.

Das Maximum des Verlustfaktors tan delta liegt bei erfindungsgemäßen Antidröhnmassen vorzugsweise im Bereich von -30 bis +60°C. Im Falle der Verwendung von Kern-Schale-Partikeln oder von anderen Partikeln mit mehrphasiger Partikelstruktur, wobei die verschiedenen Polymerphasen unterschiedliche Glasübergangstemperaturen haben, gibt es in der Regel mindestens zwei Maxima des Verlustfaktors bei mindestens zwei verschiedenen Temperaturen. In diesem Fall liegen vorzugsweise alle Maxima des Verlustfaktors im Bereich von -30 bis +60 °C.

Gegenstand der Erfindung ist auch die Verwendung einer erfindungsgemäßen Antidröhnmasse zur Schwingungsdämpfung von Karosserieteilen eines Fahrzeugs sowie ein Verfahren zur Dämpfung von Vibrationen oder Schwingungen von Bauteilen von Fahrzeugen, wobei
(1) eine oben näher beschriebene Antidröhnmasse mit einem Gehalt an einer erfindungsgemäßen Polymerdispersion zur Verfügung gestellt wird, und
(2) die Antidröhnmasse auf ein Bauteil eines Fahrzeuges aufgebracht und getrocknet wird.

Das Aufbringen kann auf übliche Art erfolgen, z.B. durch Streichen, Rollen oder Sprühen. Die aufgebrachte Menge ist vorzugsweise von 1 bis 7 kg/m² oder von 2 bis 6 kg/m² nach Trocknen. Das Trocknen kann bei Umgebungstemperatur oder vorzugsweise durch Anwendung von Wärme erfolgen. Die Trocknungstemperaturen sind vorzugsweise von 80 bis 210°C oder von 90 bis 180 °C oder von 120 bis 170 °C.

Die Antidröhnmasse kann beispielsweise angewendet werden in Fahrzeugen aller Art, insbesondere Straßenkraftfahrzeugen, Automobilen, Schienenfahrzeugen aber auch in Schiffen, Flugzeugen, elektrischen Maschinen, Baumaschinen und Gebäuden.

Die erfindungsgemäß in Antidröhnmassen verwendeten Polymerdispersionen haben gute anwendungstechnische Eigenschaften hinsichtlich guter Auftragbarkeit, guten schwingungsdämpfenden Eigenschaften, gutem Trocknungsverhalten und geringer Wasseraufnahme der getrockneten Massen.

### Beispiele

Einsatzstoffe:

| | |
|---|---|
| Bisomer® S20W | MPEG 2000 MA, 50 %-ig in Wasser; Methyl-poly(ethylenglykol)-methacrylat, mit einem gewichtsmittleren Molekulargewicht der Po-ly(ethylenglykol)-Gruppe von 2000 |
| Disponil® SDS | Natriumdodecylsulfat, 15-%ig in Wasser |

### Beispiel 1: Dispersion D1

In einem 2-Liter Polymerisationsreaktor mit Ankerrührer und Heiz-/Kühleinrichtung wird ein Gemisch aus 233,3 g entionisiertem Wasser, 4,0 g Acrylsäure, 3,8 g 25 %-ige wässrige Ammoniaklösung, 2,8 g Styrol, 2,3 g 2-Hydroxyethylmethacrylat, 6,6 g Bisomer® S20W unter Stickstoffatmosphäre auf 90°C erhitzt. Dann wird bei genannter Temperatur eine Teilmenge von 56,8 g von Zulauf 1 und eine Teilmenge von 13,7 g von Zulauf 2 zugegeben [1. Stufe].

**Zulauf 1 ist eine Emulsion hergestellt aus**

| | |
|---|---|
| 284,6 g | entionisiertem Wasser |
| 21,3 g | Disponil® SDS |
| 4,0 g | 2-Ethylhexylthioglykolat |
| 469,0 g | n-Butylacrylat |
| 340,0 g | Methylmethacrylat |

Zulauf 2 ist 68,6 g einer 7-Gew.-%igen wässrigen Lösung von Natriumperoxodisulfat.

Nach 10 min wird der Rest von Zulauf 1 und Zulauf 2 über 4,0 Stunden gleichmäßig zudosiert [2. Stufe]. Nach Ende von Zulauf 1 wird 30 min nachpolymerisiert. Danach werden 38,5 g Wasser zugegeben und der pH-Wert mit einer 25%igen Natriumhydroxidlösung über 30 min eingestellt.
Viskosität DIN EN ISO 3219: 400 - 1500 mPas
Feststoffgehalt: 55%
pH-Wert: 6,7

### Beispiel 2: Dispersion D2 (Vergleich)

Acronal® DS 3502: Acrylsäureester Copolymer, 55%ige Dispersion in Wasser
Antidröhnmasse A1:
   Die wässrige Dispersion D1 wird bei Raumtemperatur im Verhältnis 25:75 (fest:fest) mit den Füllstoffen Bariumsulfat, Kreide (Omyacarb® 20BG) und Epoxypulverlack (EP-Korro-Grundierung Tiefschwarz GL) im Verhältnis 46,5:46,5:7 (fest:fest) sowie 4% Diethylenglycol, 0,6% Viskalex® HV30 (Verdicker), 0,4% Lumiten I-SC (Emulgator), 1% Hexamoll DINCH (Weichmacher) und 0,2% EFKA 3580 (organisch modifiziertes Siloxan) mittels eines Dissolverrührers vermischt und anschließend im Speedmixer homogenisiert.
Antidröhnmasse A2:
   Wie Antidröhnmasse A1 unter Verwendung von Dispersion D2 statt D1.
Antidröhnmasse A3:
   Wie Antidröhnmasse A2 unter Verwendung von zusätzlich 1,4% DISPEX® Ultra PA 4580 (EF-KA 4580; polymeres Pigmentdispergiermittel).
Antidröhnmasse A4:
   Wie Antidröhnmasse A2 unter Verwendung von zusätzlich 1,1% DISPEX® Ultra PA 4530 (EF-KA 4530, modifiziertes Polyacrylat; Pigmentdispergiermittel).
Antidröhnmasse A5:
   Wie Antidröhnmasse A2 unter Verwendung von zusätzlich 1,9% Dispex® AA 4030 (Pigmentverteiler A; Pigmentdispergiermittel auf Basis von Polyacrylsäure)
Antidröhnmasse A6:
   Wie Antidröhnmasse A2 unter Verwendung von zusätzlich 1,6% Dispex® AA 4135 (Pigmentverteiler NL; Pigmentdispergiermittel)
Antidröhnmasse A7:
   Wie Antidröhnmasse A2 unter Verwendung von zusätzlich 2,2% Dispex® CX 4320 4135 (Pigmentverteiler MD 20; Pigmentdispergiermittel)
Antidröhnmasse A8:
   Wie Antidröhnmasse A2 unter Verwendung von zusätzlich 1,9% Dispex® CX 4231 (Ultradispers AB30; Pigmentdispergiermittel)

### Beschreibung der Mischaggregate:

### Speedmixer:

Es kommt ein SpeedMixer DAC 400FVZ der Firma Hausschild zum Einsatz.

### Dissolverrührer:

Die Apparatur besteht aus einem Rührwerk, einer damit angetriebenen Welle sowie einer Dissolverscheibe als Rührwerkzeug.

### Anwendungstechnische Prüfungen

### Bestimmung des Verlustfaktors:

Zur Beurteilung des Schwingungsdämpfungsverhaltens wird der Verlustfaktor tan delta bei 25°C gemessen wie in WO 2007/034933 beschrieben (analog ISO 6721-1 und ISO 6721-3). Hierzu wird ein Prüfkörper aus Stahlblech einer Größe von 30 x 300 x 1,6 mm mit der zu testenden Antidröhnmasse beschichtet und 30 min bei 160°C getrocknet.

Die Beschichtungsmenge beträgt ca. 3,0 kg pro m².

### Bestimmung der Wasseraufnahme:

Die Bestimmung der Wasseraufnahme wird in Anlehnung an die DIN EN ISO 62:2008 durchgeführt. Dazu werden von den erstellten Antidröhnmassen Filme einer Stärke von ca. 2 mm und einer Seitenlänge von je 25 mm hergestellt. Die Filme werden 30 min bei 160°C getrocknet und 24h in demineralisiertem Wasser gelagert. Bestimmt wird die relative Massezunahme bei Lagerung in Prozent.

### Trocknungsverhalten:

### i: Blasenbildung:

Die Antidröhnmasse der Stärke 3 mm und der Kantenlänge 60 mm x 100 mm wird nach 30 min Trocknung bei 160°C optisch beurteilt. Dabei findet folgende Notenskala Verwendung:
1: keine Blasen
2: 2-3 kleine Blasen
3: leichte Anhebung der Masse
4: große Blase, komplette Masse wölbt sich

### ii: Porosität:

Die Antidröhnmasse der Stärke 3 mm und der Kantenlänge 60 mm x 100 mm wird nach 30 min Trocknung bei 160°C optisch beurteilt. Dabei findet folgende Notenskala Verwendung:
1: gleichmäßige, feine Poren
2: feine bis mittlere Poren
3: gleichmäßige, mittlere Poren,
4: mittlere bis grobe Poren.

### iii: Expansion:

Die Antidröhnmasse der Stärke 3 mm und der Kantenlänge 60 mm x 100 mm wird 30 min bei 160°C getrocknet. Im Anschluss wird die Stärke der Masse erneut gemessen und die absolute Höhendifferenz zur Stärke vor Trocknung in mm ermittelt.

Die Ergebnisse sind in Tabelle 1 aufgeführt.

**Tabelle 1: Ergebnisse der Messung des Verlustfaktors, der Wasseraufnahme und des Trocknungsverhaltens**

| Beispiel | Verlustfaktor tan delta max | Wasseraufnahme [%] | Blasen | Porosität | Expansion [mm] ^{*)} |
|---|---|---|---|---|---|
| 1 | 0,16 | 11 | 1 | 1-2 | 1,1 |
| A2 ^{*)} | 0,16 | 13 | 2 | 2 | 1,3 |
| A3 ^{*)} | 0,17 | 12 | 2 | 2-3 | 1,4 |
| A4 ^{*)} | 0,16 | 15 | 2 | 2-3 | 1,4 |
| A5 ^{*)} | | 15 | 4 | 4 | 4,7 |
| A6 ^{*)} | | 18 | 4 | 4 | 4,2 |
| A7 ^{*)} | | 12 | 3-4 | 4 | 2,4 |
| A8 ^{*)} | | 19 | 3 | 3 | 3,3 |

### Vergleich

Die erfindungsgemäße Antidröhnmasse A1 basierend auf Dispersion D1 ohne Pigmentverteiler zeigt eine niedrige Wasseraufnahme, sehr gutes Trocknungsverhalten und gute Dämpfungswerte. Die Antidröhnmasse A2, ebenfalls ohne Zugabe von Pigmentverteiler und basierend auf Dispersion Acronal® DS 3502 zeigt demgegenüber eine erhöhte Wasseraufnahme und schlechteres Trocknungsverhalten. Die Zugabe von Pigmentverteilern führt in der Regel zu einer deutlichen Zunahme der Wasseraufnahme und einer verschlechterten Trocknung (Beispiele A3 bis A8). Bezüglich der Dämpfungscharakteristik verhalten sich die Massen A1 bis A4 vergleichbar.

## Patentansprüche

1. Wässrige Polymerdispersion enthaltend mindestens ein Polymerisat, welches erhältlich ist durch Emulsionspolymerisation aus einem Monomergemisch, enthaltend hydrophile Monomere (a) bis (c), welche hydrophile Gruppen aufweisen und zwar
(a) mindestens ein (Meth)acrylatmonomer mit Polyethylenglykolgruppe,
(b) mindestens ein Säuremonomer,
(c) mindestens ein Hydroxyalkyl(meth)acrylat mit 1 bis 20 C-Atomen in der Alkylgruppe, sowie mindestens ein hydrophobes Hauptmonomer (d), ausgewählt aus
(d) Alkyl(meth)acrylaten mit 1 bis 20 C-Atomen in der Alkylgruppe, Vinylaromaten und Mischungen dieser Monomeren
sowie optional
(e) weiteren, von den Monomeren (a) bis (d) verschiedenen, ethylenisch ungesättigten radikalisch polymerisierbaren Monomeren;
wobei das Polymerisat durch mindestens zweistufige Emulsionspolymerisation herstellbar ist, wobei in einer ersten Polymerisationsstufe der überwiegende Teil oder die Gesamtmenge der hydrophilen Monomere (a) bis (c) eingesetzt wird und in einer späteren Polymerisationsstufe der überwiegende Teil oder die Gesamtmenge der hydrophoben Monomere (d) eingesetzt wird.

2. Polymerdispersion nach dem vorhergehenden Anspruch, **dadurch gekennzeichnet, dass** das Polymerisat erhältlich ist durch Emulsionspolymerisation aus einem Monomergemisch, enthaltend
(a) mindestens 0,1 Gew.%, vorzugsweise 0,2 bis 5 Gew.% des mindestens einen (Meth)acrylatmonomers mit Polyethylenglykolgruppe;
(b) mindestens 0,05 Gew.%, vorzugsweise 0,1 bis 5 Gew.% des mindestens einen Säuremonomers;
(c) mindestens 0,05 Gew.%, vorzugsweise 0,1 bis 5 Gew.% des mindestens einen Hydroxyalkyl(meth)acrylat s;
(d) mindestens 50 Gew.%, vorzugsweise 60 bis 99 Gew.% des mindestens einen hydrophoben Hauptmonomers (d);
(e) 0 bis 10 Gew.%, vorzugsweise 0,1 bis 5 Gew.% an den weiteren, von den Monomeren (a) bis (d) verschiedenen, ethylenisch ungesättigten radikalisch polymerisierbaren Monomeren,
wobei die Mengenangaben jeweils auf die Gesamtmenge an Monomeren bezogen sind.

3. Polymerdispersion nach den vorhergehenden Ansprüchen, **dadurch gekennzeichnet, dass** das Polymerisat erhältlich ist durch Emulsionspolymerisation aus einem Monomergemisch, enthaltend
(a) mindestens ein Monomer ausgewählt aus Alkoxy-poly(ethylenglykol)-(meth)acrylaten, wobei die Alkoxygruppe vorzugsweise eine Methoxygruppe ist und die Poly(ethylenglykol)-Gruppe vorzugsweise ein gewichtsmittleres Molekulargewicht von 500 bis 5000 aufweist;
(b) mindestens ein Säuremonomer (b), ausgewählt aus Acrylsäure und Methacrylsäure;
(c) mindestens ein Monomer ausgewählt aus Hydroxyethyl(meth)acrylat, Hydroxypropyl(meth)acrylat und Hydroxybutyl(meth)acrylat;
(d) mindestens ein hydrophobes Monomer ausgewählt aus Alkyl(meth)acrylaten mit 1 bis 10 C-Atomen in der Alkylgruppe und Styrol;
(e) optional weiteren, von den Monomeren (a) bis (d) verschiedenen, ethylenisch ungesättigten radikalisch polymerisierbaren Monomeren, ausgewählt aus Vinylestern von bis zu 20 C-Atome enthaltenden Carbonsäuren, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

4. Polymerdispersion nach einem der vorherigen Ansprüche, **dadurch gekennzeichnet, dass** die Glasübergangstemperatur des durch Emulsionspolymerisation erhältlichen Polymerisats im Bereich von -60 °C bis kleiner oder gleich +70 °C liegt.

5. Polymerdispersion nach einem der vorherigen Ansprüche, **dadurch gekennzeichnet, dass** in der ersten Polymerisationsstufe mehr als 50 Gew.% der Gesamtmenge der hydrophilen Monomere (a) bis (c) und mindestens 1 Gew.% der Gesamtmenge der hydrophoben Monomere (d) eingesetzt wird und in einer späteren Polymerisationsstufe mindestens 80 Gew.% der Gesamtmenge der hydrophoben Monomere (d) eingesetzt wird.

6. Wässrige Partikeldispersion, vorzugsweise in Form einer Antidröhnmasse enthaltend
(i) eine Polymerdispersion gemäß einem der vorhergehenden Ansprüche ; und
(ii) anorganische Füllstoffe; und
(iii) optional organische Füllstoffe.

7. Antidröhnmasse gemäß dem vorhergehenden Anspruch, enthaltend
(a) 5 bis 50 Gew.%, bezogen auf Feststoffe, der Polymerdispersion,
(b) 40 bis 80 Gew.% anorganische Füllstoffe,
(c) 0 bis 40 Gew.% organische Füllstoffe,
(d) 10 bis 40 Gew.% Wasser und
(e) 0 bis 10 Gew.% Hilfsstoffe.

8. Antidröhnmasse nach einem der beiden vorhergehenden Ansprüche, **dadurch gekennzeichnet, dass** die anorganischen Füllstoffe ausgewählt sind aus Kaolin, Kreide, Bariumsulfat, Ruß, Graphit, Talkum, Tonmineralien, Mikrodolomit, Quarzmehl und Glimmer, die organischen Füllstoffe ausgewählt sind aus Pulverlacken, Polymerpulvern aus zum Beispiel gemahlenen Ethylen/Vinylacetat Copolymer-Festharzen, getrockneten Acrylatdispersionen und Polysaccharide und die Hilfsstoffe zu mindestens 0,1 Gew.% eingesetzt werden und ausgewählt sind aus Verdickungsmitteln, Harzen, Weichmachern, Dispergiermitteln, Cosolventien, Stabilisatoren, Benetzungsmitteln, Konservierungsstoffen, Schauminhibitoren, Glas- oder Kunststoffperlen, Glas- oder Kunststoffhohlkörpern, Gefrierschutzmitteln, Antioxidantien, UV-Absorbern, Emulgatoren, Siloxanen, organisch modifizierten Siloxanen und Antistatika.

9. Verfahren zur Herstellung einer Polymerdispersion gemäß einem der Ansprüche 1 bis 5, wobei durch mindestens zweistufige Emulsionspolymerisation ein Polymerisat hergestellt wird aus einem Monomergemisch, enthaltend hydrophile Monomere (a) bis (c), welche hydrophile Gruppen aufweisen und zwar
(a) mindestens ein (Meth)acrylatmonomer mit Polyethylenglykolgruppe,
(b) mindestens ein Säuremonomer,
(c) mindestens ein Hydroxyalkyl(meth)acrylat mit 1 bis 20 C-Atomen in der Alkylgruppe, sowie mindestens ein hydrophobes Hauptmonomer (d), ausgewählt aus
(d) Alkyl(meth)acrylaten mit 1 bis 20 C-Atomen in der Alkylgruppe, Vinylaromaten und Mischungen dieser Monomeren
sowie optional
(e) weiteren, von den Monomeren (a) bis (d) verschiedenen, ethylenisch ungesättigten radikalisch polymerisierbaren Monomeren;
wobei in einer ersten Polymerisationsstufe der überwiegende Teil oder die Gesamtmenge der hydrophilen Monomere (a) bis (c) eingesetzt wird und in einer späteren Polymerisationsstufe der überwiegende Teil oder die Gesamtmenge der hydrophoben Monomere (d) eingesetzt wird.

10. Verwendung einer Polymerdispersion nach einem der Ansprüche 1 bis 5 als Bindemittel zur Herstellung einer wässrigen Partikeldispersion, wobei die wässrige Partikeldispersion in Wasser unlösliche, dispergierte anorganische Feststoffpartikel sowie optional zusätzlich auch organische Feststoffpartikel enthält.

11. Verwendung nach dem vorhergehenden Anspruch, **dadurch gekennzeichnet, dass** die dispergierten Feststoffpartikel ausgewählt sind aus anorganischen Füllstoffen, insbesondere aus Kaolin, Kreide, Bariumsulfat, Ruß, Graphit, Talkum, Tonmineralien, Mikrodolomit, Quarzmehl und Glimmer.

12. Verwendung nach einem der beiden vorhergehenden Ansprüche, **dadurch gekennzeichnet, dass** es sich bei der wässrigen Partikeldispersion um eine Antidröhnmasse oder um eine Masse für Unterbodenschutz eines Kraftfahrzeugs handelt.

13. Verwendung einer Antidröhnmasse nach einem der Ansprüche 6 bis 8 zur Schwingungsdämpfung von Karosserieteilen eines Fahrzeugs.

14. Verfahren zur Dämpfung von Vibrationen oder Schwingungen von Bauteilen von Fahrzeugen, wobei
(1) eine Antidröhnmasse gemäß den Ansprüchen 6 bis 8 zur Verfügung gestellt wird, und
(2) die Antidröhnmasse auf ein Bauteil eines Fahrzeuges aufgebracht und getrocknet wird.

## Claims

1. An aqueous polymer dispersion comprising at least one polymer which is obtainable by emulsion polymerization from a monomer mixture comprising hydrophilic monomers (a) to (c) which have hydrophilic groups, and more specifically
(a) at least one (meth)acrylate monomer with polyethylene glycol group,
(b) at least one acid monomer,
(c) at least one hydroxyalkyl (meth)acrylate having 1 to 20 C atoms in the alkyl group,
and also at least one hydrophobic principal monomer (d), selected from
(d) alkyl (meth)acrylates having 1 to 20 C atoms in the alkyl group, vinylaromatics, and mixtures of these monomers,
and also, optionally,
(e) further monomers, different from the monomers (a) to (d), which are ethylenically unsaturated and radically polymerizable;
where the polymer is preparable by at least two-stage emulsion polymerization, where in a first polymerization stage the predominant fraction or the entire amount of the hydrophilic monomers (a) to (c) is used, and in a later polymerization stage the predominant fraction or the entire amount of the hydrophobic monomers (d) is used.

2. The polymer dispersion according to the preceding claim, wherein the polymer is obtainable by emulsion polymerization from a monomer mixture comprising
(a) at least 0.1 wt%, preferably 0.2 to 5 wt%, of the at least one (meth)acrylate monomer with polyethylene glycol group;
(b) at least 0.05 wt%, preferably 0.1 to 5 wt%, of the at least one acid monomer;
(c) at least 0.05 wt%, preferably 0.1 to 5 wt%, of the at least one hydroxyalkyl (meth)acrylate;
(d) at least 50 wt%, preferably 60 to 99 wt%, of the at least one hydrophobic principal monomer (d);
(e) 0 to 10 wt%, preferably 0.1 to 5 wt%, of the further monomers, different from the monomers (a) to (d), which are ethylenically unsaturated and radically polymerizable,
the quantity figures being based in each case on the entire amount of monomers.

3. The polymer dispersion according to the preceding claims, wherein the polymer is obtainable by emulsion polymerization from a monomer mixture comprising
(a) at least one monomer selected from alkoxypoly(ethylene glycol) (meth)acrylates, the alkoxy group preferably being a methoxy group, and the poly(ethylene glycol) group preferably having a weight-average molecular weight of 500 to 5000;
(b) at least one acid monomer (b) selected from acrylic acid and methacrylic acid;
(c) at least one monomer selected from hydroxyethyl (meth)acrylate, hydroxypropyl (meth)acrylate, and hydroxybutyl (meth)acrylate;
(d) at least one hydrophobic monomer selected from alkyl (meth)acrylates having from 1 to 10 C atoms in the alkyl group and styrene;
(e) optionally further monomers, different from the monomers (a) to (d), which are ethylenically unsaturated and radically polymerizable, selected from vinyl esters of carboxylic acids comprising up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers.

4. The polymer dispersion according to any of the preceding claims, wherein the glass transition temperature of the polymer obtainable by emulsion polymerization is in the range from -60°C to less than or equal to +70°C.

5. The polymer dispersion according to any of the preceding claims, wherein in the first polymerization stage more than 50 wt% of the entire amount of the hydrophilic monomers (a) to (c) and at least 1 wt% of the entire amount of the hydrophobic monomers (d) are used, and in a later polymerization stage at least 80 wt% of the entire amount of the hydrophobic monomers (d) is used.

6. An aqueous particle dispersion, preferably in the form of a sound deadener composition, comprising
(i) a polymer dispersion according to any of the preceding claims; and
(ii) inorganic fillers; and
(iii) optionally organic fillers.

7. A sound deadener composition according to the preceding claim, comprising
(a) 5 to 50 wt%, based on solids, of the polymer dispersion,
(b) 40 to 80 wt% of inorganic fillers,
(c) 0 to 40 wt% of organic fillers,
(d) 10 to 40 wt% of water, and
(e) 0 to 10 wt% of auxiliaries.

8. The sound deadener composition according to either of the two preceding claims, wherein the inorganic fillers are selected from kaolin, chalk, barium sulfate, carbon black, graphite, talc, clay minerals, microdolomite, finely ground quartz, and mica, the organic fillers are selected from powder coating materials, polymer powders of, for example, ground solid ethylene/vinyl acetate copolymer resins, dried acrylate dispersions, and polysaccharides, and the auxiliaries are used at not less than 0.1 wt% and are selected from thickeners, resins, plasticizers, dispersants, cosolvents, stabilizers, wetting agents, preservatives, foam inhibitors, glass beads or plastics beads, hollow glass or plastics bodies, antifreeze agents, antioxidants, UV absorbers, emulsifiers, siloxanes, organically modified siloxanes, and antistats.

9. A process for preparing a polymer dispersion according to any of claims 1 to 5, where at least two-stage emulsion polymerization is used to prepare a polymer from a monomer mixture, comprising hydrophilic monomers (a) to (c) which have hydrophilic groups, and more specifically
(a) at least one (meth)acrylate monomer with polyethylene glycol group,
(b) at least one acid monomer,
(c) at least one hydroxyalkyl (meth)acrylate having 1 to 20 C atoms in the alkyl group,
and also at least one hydrophobic principal monomer (d), selected from
(d) alkyl (meth)acrylates having 1 to 20 C atoms in the alkyl group, vinylaromatics, and mixtures of these monomers,
and also, optionally,
(e) further monomers, different from the monomers (a) to (d), which are ethylenically unsaturated and radically polymerizable;
where in a first polymerization stage the predominant fraction or the entire amount of the hydrophilic monomers (a) to (c) is used, and in a later polymerization stage the predominant fraction or the entire amount of the hydrophobic monomers (d) is used.

10. The use of a polymer dispersion according to any of claims 1 to 5 as a binder for preparing an aqueous particle dispersion, the aqueous particle dispersion comprising dispersed inorganic particulate solids that are insoluble in water, and also, optionally, further, organic particulate solids as well.

11. The use according to the preceding claim, wherein the dispersed particulate solids are selected from inorganic fillers, more particularly from kaolin, chalk, barium sulfate, carbon black, graphite, talc, clay minerals, microdolomite, finely ground quartz, and mica.

12. The use according to either of the two preceding claims, wherein the aqueous particle dispersion is a sound deadener composition or a composition for underbody protection on a motor vehicle.

13. The use of a sound deadener composition according to any of claims 6 to 8 for vibration damping of bodywork parts of a vehicle.

14. A method for damping oscillations or vibrations of vehicle components, where
(1) a sound deadener composition according to claims 6 to 8 is provided, and
(2) the sound deadener composition is applied to a vehicle component and dried.

## Revendications

1. Dispersion aqueuse de polymère contenant au moins un polymère, qui peut être obtenu par polymérisation en émulsion d'un mélange de monomères, contenant des monomères hydrophiles (a) à (c), qui comprennent des groupes hydrophiles, à savoir :
(a) au moins un monomère de (méth)acrylate contenant un groupe polyéthylène glycol,
(b) au moins un monomère acide,
(c) au moins un (méth)acrylate d'hydroxyalkyle contenant 1 à 20 atomes C dans le groupe alkyle, ainsi qu'au moins un monomère principal hydrophobe (d), choisi parmi
(d) les (méth)acrylates d'alkyle contenant 1 à 20 atomes C dans le groupe alkyle, les composés aromatiques de vinyle et les mélanges de ces monomères, ainsi qu'éventuellement
(e) d'autres monomères éthyléniquement insaturés, polymérisables par voie radicalaire, différents des monomères (a) à (d) ;
le polymère pouvant être fabriqué par polymérisation en émulsion à au moins deux étapes, la majeure partie ou la quantité totale des monomères hydrophiles (a) à (c) étant utilisée lors d'une première étape de polymérisation et la majeure partie ou la quantité totale des monomères hydrophobes (d) étant utilisée lors d'une étape de polymérisation ultérieure.

2. Dispersion de polymère selon la revendication précédente, **caractérisée en ce que** le polymère peut être obtenu par polymérisation en émulsion d'un mélange de monomères, contenant
(a) au moins 0,1 % en poids, de préférence 0,2 à 5 % en poids, dudit au moins un monomère de (méth)acrylate contenant un groupe polyéthylène glycol ;
(b) au moins 0,05 % en poids, de préférence 0,1 à 5 % en poids, dudit au moins un monomère acide ;
(c) au moins 0,05 % en poids, de préférence 0,1 à 5 % en poids, dudit au moins un (méth)acrylate d'hydroxyalkyle ;
(d) au moins 50 % en poids, de préférence 60 à 99 % en poids, dudit au moins un monomère principal hydrophobe (d) ;
(e) 0 à 10 % en poids, de préférence 0,1 à 5 % en poids, des autres monomères éthyléniquement insaturés, polymérisables par voie radicalaire, différents des monomères (a) à (d),
les données de quantité se rapportant à chaque fois à la quantité totale des monomères.

3. Dispersion de polymère selon la revendication précédente, **caractérisée en ce que** le polymère peut être obtenu par polymérisation en émulsion d'un mélange de monomères contenant :
(a) au moins un monomère choisi parmi les (méth)acrylates d'alcoxy-poly(éthylène glycol), le groupe alcoxy étant de préférence un groupe méthoxy et le groupe poly(éthylène glycol) présentant de préférence un poids moléculaire moyen en poids de 500 à 5 000 ;
(b) au moins un monomère acide (b), choisi parmi l'acide acrylique et l'acide méthacrylique ;
(c) au moins un monomère choisi parmi le (méth)acrylate d'hydroxyéthyle, le (méth)acrylate d'hydroxypropyle et le (méth)acrylate d'hydroxybutyle ;
(d) au moins un monomère hydrophobe choisi parmi les (méth)acrylates d'alkyle contenant 1 à 10 atomes C dans le groupe alkyle et le styrène ;
(e) éventuellement d'autres monomères éthyléniquement insaturés polymérisables par voie radicalaire, différents des monomères (a) à (d), choisis parmi les esters de vinyle d'acides carboxyliques contenant jusqu'à 20 atomes C, les nitriles éthyléniquement insaturés, les halogénures de vinyle, les éthers de vinyle d'alcools contenant 1 à 10 atomes C, les hydrocarbures aliphatiques contenant 2 à 8 atomes C et une ou deux doubles liaisons ou les mélanges de ces monomères.

4. Dispersion de polymère selon l'une quelconque des revendications précédentes, **caractérisée en ce que** la température de transition vitreuse du polymère pouvant être obtenu par polymérisation en émulsion se situe dans la plage allant de -60 °C à une température inférieure ou égale à +70 °C.

5. Dispersion polymère selon l'une quelconque des revendications précédentes, **caractérisée en ce que**, lors de la première étape de polymérisation, plus de 50 % en poids de la quantité totale des monomères hydrophiles (a) à (c) et au moins 1 % en poids de la quantité totale des monomères hydrophobes (d) sont utilisées et, lors d'une étape de polymérisation ultérieure, au moins 80 % en poids de la quantité totale des monomères hydrophobes (d) est utilisée.

6. Dispersion aqueuse de particules, de préférence sous la forme d'une masse d'insonorisation contenant
(i) une dispersion de polymère selon l'une quelconque des revendications précédentes ; et
(ii) des charges inorganiques ; et
(iii) éventuellement des charges organiques.

7. Masse d'insonorisation selon la revendication précédente, contenant
(a) 5 à 50 % en poids, par rapport aux solides, de la dispersion de polymère,
(b) 40 à 80 % en poids de charges inorganiques,
(c) 0 à 40 % en poids de charges organiques,
(d) 10 à 40 % en poids d'eau et
(e) 0 à 10 % en poids d'adjuvants.

8. Masse d'insonorisation selon l'une quelconque des deux revendications précédentes, **caractérisée en ce que** les charges inorganiques sont choisies parmi le kaolin, la craie, le sulfate de baryum, le noir de carbone, le graphite, le talc, les minéraux argileux, la microdolomite, la farine de quartz et le mica, les charges organiques sont choisies parmi les vernis en poudre, les poudres polymères constituées par exemple de résines solides de copolymère d'éthylène/acétate de vinyle broyées, les dispersions d'acrylate séchées et les polysaccharides, et les adjuvants sont utilisés à hauteur d'au moins 0,1 % en poids, et sont choisis parmi les épaississants, les résines, les plastifiants, les dispersants, les cosolvants, les stabilisateurs, les agents mouillants, les conservateurs, les inhibiteurs de mousse, les perles en verre ou en plastique, les corps creux en verre ou en plastique, les agents antigel, les antioxydants, les absorbants UV, les émulsifiants, les siloxanes, les siloxanes modifiés organiquement et les antistatiques.

9. Procédé de fabrication d'une dispersion de polymère selon l'une quelconque des revendications 1 à 5, dans lequel un polymère est fabriqué par polymérisation en émulsion à au moins deux étapes à partir d'un mélange de monomères, contenant des monomères hydrophiles (a) à (c), qui comprennent des groupes hydrophiles, à savoir
(a) au moins un monomère de (méth)acrylate contenant un groupe polyéthylène glycol,
(b) au moins un monomère acide,
(c) au moins un (méth)acrylate d'hydroxyalkyle contenant 1 à 20 atomes C dans le groupe alkyle, ainsi qu'au moins un monomère principal hydrophobe (d), choisi parmi
(d) les (méth)acrylates d'alkyle contenant 1 à 20 atomes C dans le groupe alkyle, les composés aromatiques de vinyle et les mélanges de ces monomères, ainsi qu'éventuellement
(e) d'autres monomères éthyléniquement insaturés, polymérisables par voie radicalaire, différents des monomères (a) à (d) ;
la majeure partie ou la quantité totale des monomères hydrophiles (a) à (c) étant utilisée lors d'une première étape de polymérisation et la majeure partie ou la quantité totale des monomères hydrophobes (d) étant utilisée lors d'une étape de polymérisation ultérieure.

10. Utilisation d'une dispersion de polymère selon l'une quelconque des revendications 1 à 5 en tant que liant pour la fabrication d'une dispersion aqueuse de particules, la dispersion aqueuse de particules contenant des particules solides inorganiques dispersées insolubles dans l'eau et éventuellement également des particules solides organiques.

11. Utilisation selon la revendication précédente, **caractérisée en ce que** les particules solides dispersées sont choisies parmi les charges inorganiques, notamment parmi le kaolin, la craie, le sulfate de baryum, le noir de carbone, le graphite, le talc, les minéraux argileux, la microdolomite, la farine de quartz et le mica.

12. Utilisation selon l'une quelconque des deux revendications précédentes, **caractérisée en ce que** la dispersion aqueuse de particules est une masse d'insonorisation ou une masse pour la protection du bas de caisse d'un véhicule à moteur.

13. Utilisation d'une masse d'insonorisation selon l'une quelconque des revendications 6 à 8 pour l'amortissement des oscillations de parties de carrosserie d'un véhicule.

14. Procédé d'amortissement des vibrations ou des oscillations de composants de véhicules, selon lequel
(1) une masse d'insonorisation selon les revendications 6 à 8 est mise à disposition et
(2) la masse d'insonorisation est appliquée sur un composant d'un véhicule et séchée.
